# EUROPÄISCHE PATENTSCHRIFT

(11) **EP 3 060 811 B1**
(45) Veröffentlichungstag und Bekanntmachung des Hinweises auf die Patenterteilung: **30.09.2020**
(21) Anmeldenummer: 14780850.5
(22) Anmeldetag: 03.10.2014
(51) Int. Cl.: F04D 27/00, F04D 29/70

(54) **VERFAHREN ZUR ANSTEUERUNG EINES MOTORS EINES VENTILATORS EINES WÄRMEAUSTAUSCHERS, ANSTEUERVORRICHTUNG FÜR EINEN VENTILATOR UND WÄRMEAUSTAUSCHER**
METHOD FOR CONTROLLING THE MOTOR OF A HEAT EXCHANGER FAN, CONTROL DEVICE FOR A FAN AND HEAT EXCHANGER
PROCÉDÉ DE COMMANDE D'UN MOTEUR D'UN VENTILATEUR D'UN ÉCHANGEUR DE CHALEUR, DISPOSITIF DE COMMANDE POUR UN VENTILATEUR ET ÉCHANGEUR DE CHALEUR

(30) Priorität: 23.10.2013 EP 13189969
(43) Veröffentlichungstag der Anmeldung: 31.08.2016
(73) Patentinhaber: Güntner GmbH & Co. KG, 82256 Fürstenfeldbruck (DE)
(72) Erfinder: KÖCHER, Jörg, 86919 Utting (DE); JABS, Markus, 33165 Lichtenau (DE); RIESS, Reiner, 83624 Otterfing (DE)
(74) Vertreter: Intellectual Property Services GmbH
(86) Internationale Anmeldenummer: PCT/EP2014/071261
(87) Internationale Veröffentlichungsnummer: WO 2015/058945

(56) Entgegenhaltungen:
- EP-A1- 2 543 888
- DE-U1- 20 218 951
- US-A- 5 137 428
- US-A1- 2002 101 714
- US-A1- 2004 018 079
- US-B1- 6 170 480

## Beschreibung

Die Erfindung betrifft ein Verfahren zur Ansteuerung eines Motors eines Ventilators eines Wärmeaustauschers nach dem Oberbegriff des Anspruchs 1, eine Ansteuervorrichtung für einen Ventilator nach dem Oberbegriff des Anspruchs 10 und einen Wärmeaustauscher nach dem Oberbegriff des Anspruchs 13.

Es sind bereits Verfahren zur Ansteuerung eines Motors eines Ventilators eines Wärmeaustauschers bekannt, bei welchen ein Anlaufverhalten des Motors erfasst wird.

Das Dokument US 2004/018079 A1 offenbart ein Verfahren zur Ansteuerung eines Ventilators, wobei das Verfahren das Stoppen des Ventilators sowie das Starten des gestoppten Ventilators umfasst.

Der Erfindung liegt insbesondere die Aufgabe zugrunde, die Anlaufsicherheit des Wärmeaustauschers, insbesondere des Ventilators, zu verbessern. Sie wird durch ein erfindungsgemässes Verfahren zur Ansteuerung eines Motors eines Ventilators eines Wärmeaustauschers entsprechend dem Anspruch 1, eine Ansteuervorrichtung für einen Ventilator entsprechend dem Anspruch 10 und einen Wärmeaustauscher entsprechend dem Anspruch 13 gelöst.

Weiterbildungen der Erfindung ergeben sich aus den abhängigen Ansprüchen.

Die Erfindung geht aus von einem Verfahren zur Ansteuerung eines Motors eines Ventilators eines Wärmeaustauschers, wobei ein Anlaufverhalten des Motors erfasst wird.

Es wird vorgeschlagen, dass ein Anlaufhindernis des Motors detektiert wird und das Anlaufverhalten des Motors nach einem vorgegebenen Korrekturschema eingestellt wird.

Unter einem Anlaufhindernis des Motors kann hierbei verstanden werden, dass der Ventilator trotz Ansteuerung überhaupt nicht anlaufen kann oder zumindest nur unter Schwierigkeiten anlaufen kann, was neben einem erhöhten Verschleiss beteiligter Maschinenkomponenten wie Lagern, Antriebsmotor usw. auch zu einem höheren Energieverbrauch und damit letztlich insgesamt zu einem ineffektiven Betriebsverhalten führen kann. Das Anlaufhindernis kann ein blockiertes oder zumindest teilweise blockiertes Lüfterrad des Ventilators sein, so dass der Ventilator zum Beispiel nur unter erhöhter Anlauflast anlaufen kann. Beispielsweise kann das Lüfterrad durch Schmutz, Schnee, Eis, Korrosion, wie Rost oder durch andere unerwünschte Mechanismen blockiert sein. Das Anlaufhindernis kann aber auch eine andere Blockaden des Ventilators, insbesondere des Motors oder des Lüfterrads, sein. Das Anlaufhindernis des Motors kann beispielsweise dadurch detektiert werden, dass eine eingestellte Drehzahl nicht erreicht werden kann oder ein erhöhter Stromverbrauch des Motors detektiert werden kann. Wobei in der Praxis ein Anlaufhindernis selbstverständlich auch durch andere, dem Fachmann an sich bekannte Massnahmen detektiert werden kann.

Das Anlaufverhalten des Motors wird erfindungsgemäss nach einem vorgegebenen Korrekturschema eingestellt, umfassend abschnittsweises Einstellen eines Drehmoments und einer Drehrichtung des Motors, wobei in jedem Abschnitt die Drehrichtung umgekehrt wird, und das Drehmoment sukzessiv erhöht wird.

Dadurch kann der Motor mit einem Wechselmoment beaufschlagt werden, durch welchen der Ventilator, insbesondere das Lüfterrad, in Schwingung versetzt werden, welche das Anlaufhindernis, insbesondere eine mechanische Blockade, überwinden kann. Dadurch kann beispielsweise das Lüfterrad losgerissen und die Blockade gelöst werden.

Vorteilhafterweise kann dadurch, dass das Anlaufhindernis des Motors detektiert wird und das Anlaufverhalten des Motors nach dem erfinderischen vorgegebenen Korrekturschema eingestellt wird, eine Anlaufsicherheit erhöht werden und das Anlaufverhalten und / oder die Energieeffizienz verbessert werden. Es können blockierte Ventilatoren automatisch wieder in Betrieb gesetzt und beispielsweise durch die Erwärmung des Motors kann der Ventilator enteist werden, was ein "losreisen" des Ventilators begünstigt.

Vorteilhafterweise kann dadurch auch, wenn der Ventilator bzw. der Motor nicht das eingestellte Drehmoment oder die eingestellte Drehzahl aufweisen, beispielsweise eine Störmeldung generiert werden. Weiterer Vorteil ist, dass dadurch verhindert werden kann, dass sich eine Schnee- oder Eisschicht auf den Ventilatoren aufbaut. Somit kann eine längere Lebensdauer des Ventilators bzw. der Lagerung des Ventilators erreicht werden. Ausserdem ist so eine Früherkennung eines Defekts am Ventilator oder Motor möglich und es kann ein regelmäßiges automatisches Abtragen von beispielsweise Schnee auf dem Ventilator oder Schutzgitter erreicht werden.

Erfindungsgemäß wird ein Drehmoment des Motors und eine Drehrichtung des Motors eingestellt. Das Drehmoment des Motors wird bis zu einem vorgegebenen Solldrehmoment eingestellt wobei die Drehrichtung des Motors verändert wird.

Das Solldrehmoment kann dem maximalen Drehmoment entsprechen oder aber auch einem anderen niedrigeren Drehmoment.

Das Drehmoment des Motors wird bis zum vorgegebenen Solldrehmoment verändert. Das Solldrehmoment wird dabei durch ein abschnittsweises Erhöhen des Drehmoments erreicht. Die Drehrichtung des Motors kann beispielsweise in einem definierten Zeitabschnitt verändert werden.

Unter einstellen kann im Speziellen steuern und / oder regeln verstanden werden. Unter Steuern ist zu verstehen, dass ein Parameter beispielsweise in einem speziellen Ausführungsbeispiel das Drehmoment und die Drehzahl verändert werden können. Unter Regeln ist zu verstehen, dass der Parameter beispielsweise detektiert, erfasst oder gemessen und ein berechneter oder vorgegebener Wert gehalten werden kann, um das Drehmoment und die Drehzahl zu beeinflussen oder zu halten. Ausserdem kann unter "eingestellt werden" auch ein entsprechender programmgesteuerter Vorgang, insbesondere eine Programmierung verstanden werden. Das Solldrehmoment hat den Vorteil, dass dadurch das Drehmoment begrenzt werden kann, wodurch eine Überlastung des Motors und / oder des Lüfterrads vermieden werden kann. Weiterer Vorteil ist, dass dadurch, dass das Drehmoment und eine Drehrichtung des Motors eingestellt oder verändert wird, die Anlaufsicherheit des Wärmeaustauschers, insbesondere des Ventilators, verbessert wird. Somit kann beispielsweise eine sich gebildete Schmutz-, Schnee oder Eisschicht am Ventilator, welche das Anlaufen des Ventilators verhindert, entfernt werden.

Erfindungsgemäß wird das Drehmoment sukzessiv erhöht. Die Drehrichtung des Motors wird dabei umgekehrt Dadurch kann eine Periodizität in dem Wechselmoment erreicht werden, wodurch insbesondere eine Eigenschwingung, die der Ventilator aufweisen kann, vorteilhaft genutzt werden kann. Dadurch kann das Moment, welches auf die Blockade wirkt, weiter erhöht werden, wodurch eine Wirksamkeit der Ansteuerung des Motors weiter erhöht werden kann. Wie bereits beschrieben, wird das Drehmoment abschnittsweise erhöht und die Drehrichtung des Motors abschnittsweise verändert.

Unter abschnittsweise verändern" soll dabei insbesondere verstanden werden, dass beispielsweise mittels einer Kenngrösse mehrere aufeinanderfolgende Zeitabschnitte festgelegt werden, in welchen der Motor jeweils in ähnlichen, insbesondere sich periodisch wiederholenden, Zeitabschnitte eingestellt, also angesteuert, wird. Das Drehmoment wird sukzessive erhöht, wodurch zumindest eine Belastung für den Motor und / oder das Lüfterrad niedrig gehalten werden kann und kleine Blockaden gelöst werden können, ohne dass sich ein Verschleiss erhöht. Gleichzeitig kann sichergestellt werden, dass auch stärkere Blockaden sicher gelöst werden können. Unter "sukzessive" soll dabei insbesondere verstanden werden, dass das Drehmoment abschnittsweise erhöht wird. Insbesondere soll unter "sukzessive erhöht wird" auch verstanden werden, dass das Solldrehmoment, mit dem der Motor in einem Abschnitt angesteuert wird, sukzessive erhöht wird.

Erfindungsgemäß wird das Drehmoment erhöht nachdem die Drehrichtung umgekehrt wurde. Ausserdem wird nach Erreichen des Solldrehmoments, das Drehmoment umgekehrt. Dadurch kann ein Wechselmoment erzeugt werden, welches besonders vorteilhaft zum Losreissen des Lüfterrads geeignet ist. Unter einem "Wechselmoment" soll dabei insbesondere ein Drehmoment verstanden werden, welches um einen Wert schwingt. Das Drehmoment als gerichtete Grösse kann dabei stets in die gleiche Richtung gerichtet sein oder, entsprechend der besonders vorteilhaften Ausgestaltung, seine Richtung ändern.

Das Drehmoment wird erhöht nachdem die Drehrichtung umgekehrt wurde. Dadurch wird nach jeder Drehrichtungsumkehr das Drehmoment erhöht, wodurch das Losreissen des Lüfterrads besonders begünstigt wird. Insbesondere die Erhöhung des Drehmoments bewirkt dabei auch, dass sich der Motor erwärmt, was zusätzlich das Losreissen begünstigt, wenn das Lüfterrad durch Schnee oder Eis blockiert ist. Durch eine solche Ausgestaltung kann somit besonders gut erreicht werden, dass das Lüfterrad losgerissen wird, wenn es durch Schnee oder Eis blockiert ist. Insbesondere wird auch nach dem Erreichen des Solldrehmoments das Drehmoment umgekehrt und eine Zeitspanne, innerhalb der versucht wird das Lüfterrad loszureissen, kann besonders lang sein, wodurch eine Effektivität weiter erhöht werden kann.

In Ausgestaltung der Erfindung wird eine Stillstandszeit des Motors des Ventilators detektiert. Der Motor des Ventilators läuft nach Erreichen einer Sollstillstandszeit an, wenn keine Lastanforderung des Wärmeaustauschers detektiert wird. Ausserdem wird der Motor des Ventilators auf einen Regelbetrieb umgestellt, wenn eine Lastanforderung besteht.

Die Stillstandszeit kann eine definierte Zeitspanne sein. Die Sollstillstandszeit kann ein Maximalwert der Stillstandszeit sein. Unter "keine Lastanforderung" kann verstanden werden, dass der Wärmeaustauscher nicht betrieben wird, weil beispielsweise keine äussere Lastanforderung an den Wärmeaustauscher vorhanden ist. Unter "einem Regelbetrieb" kann verstanden werden, dass der Wärmeaustauscher, insbesondere der Ventilator bzw. der Motor des Ventilators nur betrieben werden, wenn eine Lastanforderung besteht. Der Ventilator bzw. der Motor des Ventilators werden nicht betrieben, wenn keine Lastanforderung besteht. Das Anlaufen der Ventilatoren bzw. des Motors der Ventilatoren in einem Wartungslauf kann nur erfolgen, wenn keine Lastanforderung an den Wärmeaustauscher besteht. Insbesondere der Ventilator bzw. der Motor des Ventilators werden dabei nur betrieben, wenn kein Regelbetrieb angefordert wird, also keine Lastanforderung besteht. Um ein Festsetzen der Ventilatoren zu verhindern, können diese in Abhängigkeit von der Sollstillstandszeit in einem Wartungslauf angefahren werden, auch wenn keine Lastanforderung besteht.

Das Anlaufen nach diesen Bedingungen kann als ein Wartungslauf verstanden werden. Sofern während des Wartungslaufs eine Lastanforderung besteht, kann automatisch vom Wartungslauf in den Regelbetrieb umgeschaltet werden. Der Motor kann mit dem Solldrehmoment und / oder einer maximalen Drehzahl eingestellt und betrieben werden. Der Motor kann aber auch einem niedrigeren Drehmoment und / oder einer niedrigeren Drehzahl eingestellt und betrieben werden. Vorteilhafterweise kann, wenn der Ventilator bzw. der Motor nicht das eingestellte Drehmoment oder die eingestellte Drehzahl aufweisen, eine Störmeldung generiert werden. Vorteil ist, dass dadurch verhindert werden kann, dass sich eine Schnee- oder Eisschicht auf den Ventilatoren aufbauen kann. Somit kann eine längere Lebensdauer des Ventilators bzw. der Lagerung des Ventilators erreicht werden. Ausserdem ist so eine Früherkennung eines Defekts am Ventilator oder Motor möglich und es kann ein regelmäßiges automatisches Abtragen von beispielsweise Schnee auf dem Ventilator oder Schutzgitter erreicht werden.

In einer weiteren Ausgestaltung der Erfindung wird eine Umgebungstemperatur des Wärmeaustauschers detektiert. Dadurch kann Verfahren an weitere Umgebungsbedingungen angepasst werden, insbesondere für unterschiedliche Temperaturbereiche unterschiedlich ausgelegt werden. Beispielsweise kann anders eingestellt oder angesteuert werden, wenn anhand des Temperaturbereichs ausgeschlossen werden kann, dass das Lüfterrad durch Schnee oder Eis blockiert ist.

Die Erfindung betrifft im Weiteren eine Ansteuervorrichtung für einen Ventilator eines Wärmeaustauschers gemäß Anspruch 10.

Die Ansteuervorrichtung kann eine an sich bekannte Steuereinheit oder ein Steuergerät sein, das steuern und regeln kann, oder aber ein programmierbares Speicherelement, oder ein Speicherelement mit einer fest programmierbaren Funktion. Die Ansteuervorrichtung kann in der Praxis besonders vorteilhaft Informationen empfangen und senden sowie technische Berechnungen durchführen. Die Ansteuervorrichtung kann ein Drehmoment und / oder eine Drehzahl einstellen. Die Ansteuervorrichtung kann eventuell aber auch weitere Parameter einstellen. Die Ansteuervorrichtung kann die Informationen beispielsweise von einem oder mehreren Sensoren empfangen, mit welchem beispielsweise Parameter gemessen oder berechnet werden. Die Ansteuervorrichtung kann aber auch weitere Informationen empfangen, beispielsweise von weiteren Sensoren, einer Kontrolleinheit oder einer weiteren Ansteuervorrichtung. Die Ansteuervorrichtung kann als Teil des Wärmeaustauschers ausgebildet sein, also beispielsweise innerhalb oder ausserhalb eines Gehäuses am Wärmeaustauschers befestigt sein, oder aber unabhängig vom Wärmeaustauscher angeordnet sein, beispielsweise innerhalb eines Raums oder eines Schaltschranks. Die Ansteuervorrichtung kann mit den Sensoren, der Kontrolleinheit oder einer weiteren Ansteuervorrichtung singnalverbunden sein und kommunizieren, beispielsweise mittels eines Kabels, oder aber kabellos, beispielsweise mittels Funk. Unter Steuern wird verstanden, dass ein Drehmoment und eine Drehzahl, mittels der Ansteuervorrichtung verändert werden. Unter Regeln wird verstanden, dass das Drehmoment und die Drehzahl, erfasst oder gemessen und ein berechneter oder vorgegebener Wert gehalten oder beeinflusst werden kann. Unter einer Ansteuervorrichtung kann insbesondere eine Einheit mit zumindest einer Steuerelektronik verstanden werden. Unter einer "Steuerelektronik" kann insbesondere eine Einheit mit einer Prozessoreinheit und mit einer Speichereinheit sowie mit einem in der Speichereinheit gespeicherten Betriebsprogramm verstanden werden.

Mittels der Ansteuervorrichtung gemäß Anspruch 10 kann der Motor mit einem Wechselmoment beaufschlagt werden, durch welchen der Ventilator, insbesondere das Lüfterrad, in Schwingung versetzt werden, welche das Anlaufhindernis, insbesondere eine mechanische Blockade, überwinden kann. Dadurch kann beispielsweise das Lüfterrad losgerissen und die Blockade gelöst werden. Vorteilhafterweise kann somit, wenn der Ventilator bzw. der Motor nicht das eingestellte Drehmoment oder die eingestellte Drehzahl aufweisen, eine Störmeldung generiert werden. Weiterer Vorteil ist, dass dadurch verhindert werden kann, dass sich eine Schnee- oder Eisschicht auf den Ventilatoren aufbauen kann. Somit kann eine längere Lebensdauer des Ventilators bzw. der Lagerung des Ventilators erreicht werden. Ausserdem ist so eine Früherkennung eines Defekts am Ventilator oder Motor möglich und es kann ein regelmäßiges automatisches Abtragen von beispielsweise Schnee auf dem Ventilator oder Schutzgitter erreicht werden. Somit kann dadurch die Anlaufsicherheit erhöht werden.

In Ausgestaltung der Erfindung ist zumindest ein Sensor vorgesehen und der Sensor erfasst ein Anlaufverhalten des Motors und detektiert ein Anlaufhindernis des Motors. Ausserdem ist die Ansteuervorrichtung derart ausgestaltet, dass die Ansteuervorrichtung ein Drehmoment des Motors und eine Drehrichtung des Motors einstellt und das Drehmoment des Motors bis zu einem vorgegebenen Solldrehmoment erhöht und die Drehrichtung des Motors verändert. Der Sensor kann beispielsweise einen Strom oder eine Drehzahl erfassen und detektieren.

Somit kann die Ansteuervorrichtung vorteilhafterweise mit oder ohne Sensor an vorhandenen Wärmeaustauschern nachgerüstet werden.

Zudem wird ein Wärmeaustauscher umfassend einen Ventilator und einer Ansteuervorrichtung vorgeschlagen. Vorteilhafterweise kann ein Ventilator und / oder ein Ansteuervorrichtung an einem Wärmeaustauscher, beispielsweise mit EC-Ventilatoren oder Ventilatoren mit Möglichkeit der Drehrichtungsänderung, durch geringen steuerungstechnischen Aufwand möglich, ggf. Umrüstung von Ventilatoren nachgerüstet werden.

Weitere Vorteile ergeben sich aus der folgenden Figurenbeschreibung. In den Figuren ist ein Ausführungsbeispiel der Erfindung dargestellt.

Dabei zeigen:
- Fig. 1: beispielhaft einen Wärmeaustauscher, für den eine erfindungsgemässe Ansteuervorrichtung vorgesehen ist, und
- Fig. 2: schematisiert eine Drehmomentkurve, mit der ein Motor des Wärmeaustauschers zum Losreissen eines Ventilators angesteuert wird.
- Fig. 3: schematisiert eine weitere Drehmomentkurve, mit der ein Motor des Wärmeaustauschers zum Losreissen eines Ventilators angesteuert wird.

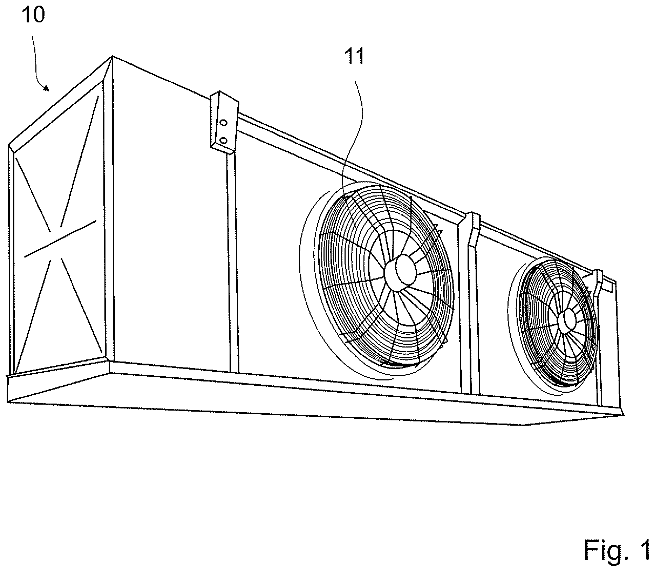

Fig. 1 zeigt einen Wärmeaustauscher 10, der für eine Klima- oder Kälteanlage vorgesehen ist, wie sie insbesondere im gewerblichen oder industriellen Bereich verwendet werden. Der Wärmeaustauscher 10 ist dazu vorgesehen, Wärmeenergie zwischen einem Kältemittel, wie beispielsweise CO₂, HFKW, NH₃ oder Glykol, und einem Luftstrom auszutauschen. Beispielsweise kann der Wärmeaustauscher 10 als ein Verdampfer ausgebildet sein, welcher dazu vorgesehen ist, das Kältemittel zu verdampfen, um dem Kältemittel Wärmenergie zu entziehen. In gleicher Weise kann der Wärmeaustauscher 10 aber auch als Luftkühler ausgebildet sein, der dazu vorgesehen ist, einen Wärmeübertrag von dem Kältemittel auf den Luftstrom zu bewirken.

Der Wärmeaustauscher 10 umfasst ein Modul, das beispielsweise mehrere Übertragungselemente und mehrere Wärmeaustauschrippen enthalten kann. Die Übertragungselemente können als Rohre oder als ein Strangpressprofil mit einer Vielzahl von Kanälen ausgeführt sein. Die Wärmeaustauschrippen können beispielsweise Lamellen oder gekantete Blechstreifen in Lamellenform sein. Die Wärmeaustauschrippen können mit den Übertragungselementen wärmeleitend verbunden sein und können einen Luftkanal ausbilden. Der Wärmeaustauscher kann ausserdem einen Ventilator umfassen, wobei der Ventilator im Luftkanal eine Luftströmung erzeugen kann. Der Ventilator 11 kann dabei grundsätzlich als ein Druckgebläse ausgebildet sein, welches entlang einer Strömungsrichtung des Gasstroms vor dem Wärmetauscher angeordnet ist. Vorzugsweise ist der Ventilator 11 jedoch entlang der Strömungsrichtung nach dem Wärmetauscher angeordnet, d.h. der Ventilator 11 ist dazu vorgesehen, in dem Luftkanal, in welchem der Wärmetauscher angeordnet ist, einen Unterdruck zu erzeugen. Ausserdem kann eine Benetzungsvorrichtung für den Wärmeaustauscher vorgesehen sein, wobei die Benetzungseinrichtung am Wärmeaustauscher angeordnet ist und den Wärmeaustauscher mit einem Benetzungsfluid benetzt.

Der Ventilator 11 umfasst einen Motor und ein Lüfterrad, das mittels des Motors angetrieben wird. Zur Steuerung des Ventilators 11 umfasst der Wärmeaustauscher 10 eine nicht näher darstellte Ansteuervorrichtung. Die Ansteuervorrichtung umfasst eine Steuer- und Regeleinheit, die dazu vorgesehen ist, den Motor des Ventilators 11 einzustellen. Zudem kann die Ansteuervorrichtung zumindest einen Sensor umfassen, der zur Erfassung eines Anlaufens des Motors mittels der Steuer- und Regeleinheit vorgesehen ist. Der Sensor kann beispielsweise als ein Drehzahlsensor ausgebildet sein, der dazu vorgesehen ist, direkt eine Drehzahl des Motors oder des Lüfterrads zu erfassen. Alternativ ist aber auch eine Ausgestaltung als Stromsensor, der dazu vorgesehen ist, das Anlaufen des Motors anhand einer Stromkurve zu erfassen, oder eine andere Ausgestaltung des Sensors denkbar.

Der Wärmeaustauscher 10 ist dazu vorgesehen, in einem klimatisierten Bereich oder einem Aussenbereich angeordnet zu werden. Insbesondere im Bereich des Lüfterrads kann sich dadurch Eis oder Schnee sammeln. Bei einer Anordnung des Wärmeaustauschers 10 in einem Aussenbereich sind der Schnee und das Eis Witterungseinflüsse, welchen der Ventilator 11 ausgesetzt ist. Bei einer Anordnung in einem klimatisierten Raum, beispielsweise einem Tiefkühlraum oder einer Fahrzeugversuchsanlage, können ebenfalls Temperaturen unter Null Grad herrschen, durch welche sich Schnee oder Eis an dem Ventilator 11 bilden kann, wenn dieser abgeschaltet ist. Beim Anlaufen blockieren insbesondere Schnee und Eis das Lüfterrad, wodurch der Motor blockiert ist. In gleicher Weise können aber auch andere Effekte das Lüfterrad blockieren.

Die Ansteuervorrichtung ist dazu vorgesehen, mittels des Sensors das Blockieren des Motors zu erkennen. Die Ansteuervorrichtung wird aktiv, wenn festgestellt wird, dass der Motor trotz einer entsprechenden Ansteuerung nicht anläuft. Erkennt die Ansteuervorrichtung, dass der Motor blockiert ist, verändert die Ansteuervorrichtung das Drehmoment 12 und die Drehrichtung 14, mit welchen der Motor angesteuert wird. Die Ansteuervorrichtung versucht, das Lüfterrad loszureissen.

Ausserdem ist die Ansteuervorrichtung dazu vorgesehen, das Drehmoment 12 und die Drehrichtung 14 abschnittsweise zu verändern. In der Ansteuervorrichtung ist eine Kenngrösse hinterlegt, welche ein Zeitintervall festlegt. Das Zeitintervall kann dabei stets eine gleiche Zeitspanne umfassen. Grundsätzlich ist aber auch denkbar, dass sich das Zeitintervall verändert, während die Ansteuervorrichtung versucht, das Lüfterrad loszureissen. In dem Betriebsprogramm zum Losreissen des Lüfterrads bilden die Zeitintervalle jeweils Abschnitte 15 aus.

Das Drehmoment 12 wird sukzessiv erhöht. Es ist, beispielsweise in der Ansteuervorrichtung, eine Kenngrösse hinterlegt, anhand der das Drehmoment 12 sukzessive erhöht wird. Die Ansteuervorrichtung erhöht dabei in jedem Abschnitt 15 das Drehmoment 12, das der Motor in dem entsprechenden Abschnitt 15 leisten soll. Das Drehmoment 12 wird erhöht, beispielsweise mittels der Ansteuervorrichtung, in dem für den Motor Werte für Spannung und/oder Strom eingestellt werden, welche von Werten des vorherigen Abschnitts 15 abweichen.

Als eine weitere Kenngrösse ist in der Ansteuervorrichtung ein Solldrehmoment 13 für das Drehmoment 12 hinterlegt. Das Solldrehmoment 13 legt maximale Werte für die Spannung und/oder den Strom fest, mit welchen der Motor zum Losreissen des Lüfterrads angesteuert wird. In den Abschnitten 15 erhöht die Ansteuervorrichtung das Drehmoment 12 sukzessive so lange, bis das Solldrehmoment 13 erreicht ist.

Die Drehrichtung 14 wird umgekehrt, wenn der Motor blockiert ist. Die Ansteuervorrichtung kehrt dabei in jedem Abschnitt 15 die Drehrichtung 14, mit der der Motor angesteuert wird, um. Durch die abschnittsweise Ansteuerung mit jeweils umgekehrter Drehrichtung 14 bei sich stetig erhöhendem Drehmoment 12 erzeugt der Motor ein Wechselmoment, durch welchen das Lüfterrad zu schwingen anfangen kann. Insbesondere für kleine Winkel bilden der Motor und das Lüfterrad ein schwingendes System mit einer Eigenfrequenz aus. Die Länge der Zeitintervalle, die jeder Abschnitt 15 aufweist, ist vorzugsweise an die Eigenfrequenz angepasst. Kleine Winkel sind dabei insbesondere Drehwinkel, die kleiner sind als ein Winkelabstand zwischen unterschiedlich gepolten Bereichen eines Permanentmagneten des Motors. Der Motor weist typischerweise eine Mehrzahl von Drehwinkel auf, welche der Permanentmagnet und eine mit dem Permanentmagnet wechselwirkende Spule relativ zueinander einnehmen, wenn der Motor unbestromt ist. Wird das Lüfterrad um Winkel bewegt, die kleiner sind als der Abstand dieser Drehwinkel, die der Permanentmagnet und die Spule zueinander einnehmen, kann der Motor durch das Wechselmoment angesteuert werden, welches der Eigenfrequenz entspricht.

Damit die Ansteuervorrichtung dazu vorgesehen ist, das Drehmoment 12 zu erhöhen, nach dem die Drehrichtung 14 umgekehrt wurde, wird der Motor in dem Betriebsprogramm zunächst mit einem Wechselmoment angesteuert, dessen Amplitude sich in jedem Abschnitt 15 stetig erhöht, bis der hinterlegte Maximalwert 13 für das Drehmoment 12 erreicht ist. Die Ansteuervorrichtung ist dazu vorgesehen, nach Erreichen des Maximalwerts 13 weiterhin das Drehmoment 12 umzukehren. Die Amplitude des Wechselmoments erhöht sich damit zunächst stetig und bleibt anschliessend konstant.

Erkennt die Ansteuervorrichtung beispielsweise mittels des Sensors, dass das Lüfterrad losgerissen wurde, beendet die Ansteuervorrichtung das Losreissen des Lüfterrads und startet den Regelbetrieb, welcher für einen Dauerbetrieb vorgesehen ist. Weiter können in der Ansteuervorrichtung Abbruchbedingungen hinterlegt sein, bei denen die Ansteuervorrichtung das Losreissen des Lüfterrads abbricht, wie beispielsweise eine Anzahl von Abschnitten 15, die ausgeführt werden, eine Zeitkonstante oder Motorwerte, welche eine Überlastung des Motors anzeigen.

Um zwischen unterschiedlichen Blockaden des Lüfterrads unterscheiden zu können, kann die Ansteuervorrichtung weiter einen Temperatursensor aufweisen, der dazu vorgesehen ist, eine Umgebungstemperatur zu bestimmen. Der Temperatursensor ist vorzugsweise im Bereich des Lüfterrads angeordnet und bestimmt eine Umgebungstemperatur im Bereich des Lüfterrads. Da das Lüfterrad lediglich bei tiefen Temperaturen, insbesondere unter 0 Grad durch Schnee oder Eis blockiert sein kann, können die verwendeten Kenngrössen und/oder die Abbruchbedingungen eine Abhängigkeit von dem einem mittels des Temperatursensors ermittelten Sensorwerts abhängen.

Beispielsweise kann bei tiefen Temperaturen später abgebrochen werden als bei hohen Temperatur. Insbesondere wenn die Ansteuervorrichtung erkennt, dass das Lüfterrad aufgrund des Wechselmoments zu schwingen anfängt und gleichzeitig der Sensorwert des Temperatursensors Sensorwerte liefert, die auf eine Blockade des Lüfterrads durch Schnee oder Eis hinweisen, kann eine wesentlich längere Betriebszeit aufweisen, als wenn der Temperatursensor Sensorwerte liefert, bei denen eine Blockade durch Schnee oder Eis ausgeschlossen ist.

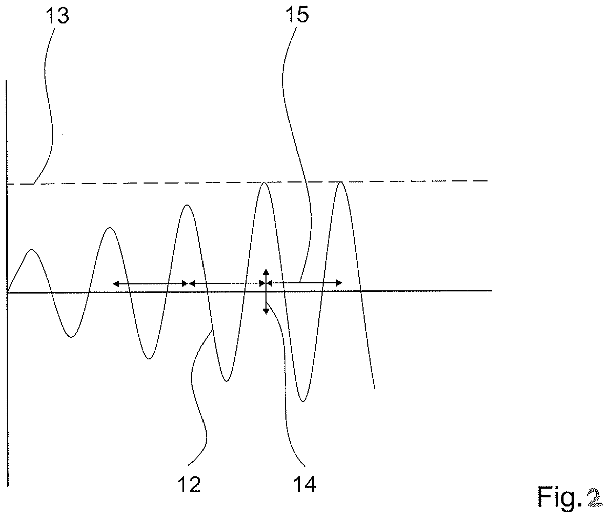

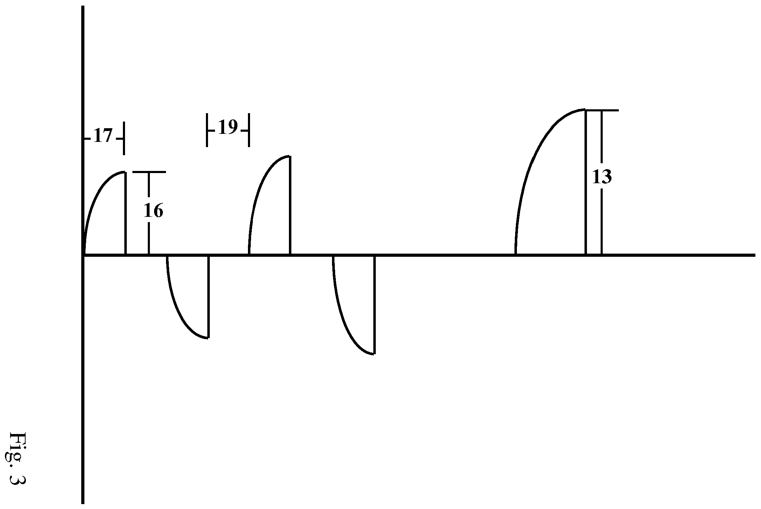

Fig. 3 zeigt schematisiert eine weitere Drehmomentkurve, mit der ein Motor des Wärmeaustauschers zum Losreissen eines Ventilators angesteuert wird. Fig. 3 entspricht im Wesentlichen Fig. 2, weshalb nur auf die Unterschiede eingegangen wird. Auf der Abszisse ist die Zeit aufgetragen und auf der Ordinate das Drehmoment 12, welches sukzessiv erhöht wird. Zunächst wird innerhalb einer Detektionszeit 17 erkannt, ob die Drehung mit einem Startdrehmoment 16 erfolgreich war. Es wird also ein Anlaufhindernis detektiert. Die Erhöhung des Drehmoments 12 erfolgt in jedem Abschnitt (siehe Fig. 2, 15), beispielsweise in einem regelmässigen oder unregelmässigen Zeitabstand. Die Erhöhung des Drehmoments erfolgt dabei bis zum Solldrehmoment 13.

## Patentansprüche

1. Verfahren zur Ansteuerung eines Motors eines Ventilators (11) eines Wärmeaustauschers (10), umfassend:
Erfassen eines Anlaufverhaltens des Motors;
Detektieren eines Anlaufhindernisses des Motors;
Einstellen des Anlaufverhaltens des Motors nach einem vorgegebenen Korrekturschema umfassend abschnittsweises Einstellen eines Drehmoments (12) und einer Drehrichtung (14) des Motors
**dadurch gekennzeichnet, dass**
in jedem Abschnitt (15) die Drehrichtung (14) umgekehrt wird, und das Drehmoment sukzessiv erhöht wird.

2. Verfahren zur Ansteuerung eines Ventilators (11) nach Anspruch 1, wobei das Drehmoment (12) des Motors bis zu einem vorgegebenen Solldrehmoment verändert wird.

3. Verfahren zur Ansteuerung eines Ventilators (11) nach einem der vorangehenden Ansprüche, wobei die Zeitintervalle jedes Abschnitts (15) korrespondieren mit der Eigenfrequenz des Ventilators (11).

4. Verfahren zur Ansteuerung eines Ventilators (11) nach einem der vorangehenden Ansprüche, wobei das Drehmoment (12) erhöht wird, nachdem die Drehrichtung (14) umgekehrt wurde.

5. Verfahren zur Ansteuerung eines Ventilators (11) nach einem der vorangehenden Ansprüche, wobei nach Erreichen des Solldrehmoments (13), das Drehmoment (12) nicht weiter erhöht wird.

6. Verfahren zur Ansteuerung eines Ventilators (11) nach einem der vorangehenden Ansprüche, wobei die Stillstandzeit des Motors des Ventilators (11) detektiert wird.

7. Verfahren zur Ansteuerung eines Ventilators (11) nach einem der vorangehenden Ansprüche, wobei der Motor des Ventilators (11) nach Erreichen einer Sollstillstandzeit anläuft, wenn keine Lastanforderung des Wärmeaustauschers (10) detektiert wird.

8. Verfahren zur Ansteuerung eines Ventilators (11) nach einem der vorangehenden Ansprüche, wobei der Motor des Ventilators (11) auf einen Regelbetrieb umgestellt wird, wenn eine Lastanforderung besteht.

9. Verfahren zur Ansteuerung eines Ventilators (11) nach einem der vorangehenden Ansprüche, wobei eine Umgebungstemperatur des Wärmeaustauschers (10) detektiert wird.

10. Ansteuervorrichtung für einen Ventilator (11) eines Wärmeaustauschers (10) zur Durchführung eines Verfahrens nach einem der Ansprüche 1 bis 9, wobei die Ansteuervorrichtung derart ausgestaltet ist, dass im Betriebszustand ein Anlaufverhalten des Motors erfassbar ist, und die Ansteuervorrichtung derart ausgestaltet ist, dass die Ansteuervorrichtung ein Anlaufhindernis des Motors detektiert und das Anlaufverhalten des Motors nach einem vorgegebenen Korrekturschema einstellt, wobei die Ansteuervorrichtung derart ausgestaltet ist, dass die Ansteuervorrichtung abschnittsweise ein Drehmoment (12) des Motors und eine Drehrichtung (14) des Motors einstellt, und **dadurch gekennzeichnet, dass** in jedem Abschnitt (15) die Drehrichtung (14) des Motors umgekehrt wird, und das Drehmoment sukzessiv erhöht wird.

11. Ansteuervorrichtung nach Anspruch 10, wobei zumindest ein Sensor vorgesehen ist und der Sensor ein Anlaufverhalten des Motors erfasst und der Sensor ein Anlaufhindernis des Motors detektiert.

12. Ansteuervorrichtung nach Anspruch 10 oder 11, wobei die Ansteuervorrichtung derart ausgestaltet ist, dass die Ansteuervorrichtung das Drehmoment (12) des Motors bis zu einem vorgegebenen Solldrehmoment erhöht.

13. Wärmeaustauscher (10) umfassend einen Ventilator (11), **dadurch gekennzeichnet, dass** der Ventilator (11) nach einem Verfahren nach einem der Ansprüche 1-9 betrieben wird, und eine Ansteuervorrichtung nach einem der Ansprüche 10 bis 12 umfasst.

## Claims

1. Method for controlling a motor of a fan (11) of a heat exchanger (10), comprising:
detecting a starting behaviour of the motor;
detecting an obstacle to starting of the motor;
adjusting the starting behaviour of the motor according to a predetermined correction scheme comprising section wise adjusting a torque (12) and a direction of rotation (14) of the motor
**characterised in that**
in each section (15) the direction of rotation (14) is reversed and the torque is successively increased.

2. Method for controlling a fan (11) according to claim 1, wherein the torque (12) of the motor is changed up to a predetermined set-point torque.

3. Method for controlling a fan (11) according to one of the preceding claims, wherein the time intervals of each section (15) correspond to the natural frequency of the fan (11).

4. Method for controlling a fan (11) according to one of the preceding claims, wherein the torque (12) is increased after the direction of rotation (14) has been reversed.

5. Method for controlling a fan (11) according to one of the preceding claims, wherein the torque (12) is not further increased after reaching the set-point torque (13).

6. Method for controlling a fan (11) according to one of the preceding claims, wherein the downtime of the motor of the fan (11) is detected.

7. Method for controlling a fan (11) according to one of the preceding claims, wherein the motor of the fan (11) starts after reaching a set-point downtime if no load demand of the heat exchanger (10) is detected.

8. Method for controlling a fan (11) in accordance with one of the preceding claims, wherein the motor of the fan (11) is switched to a controlled operation when a load demand of the heat exchanger (10) exists.

9. Method for controlling a fan (11) according to one of the preceding demands, wherein an ambient temperature of the heat exchanger (10) is detected.

10. Control device for a fan (11) of a heat exchanger (10) for carrying out a method according to one of the claims 1 to 9, the control device being designed in such a way that in the operating state a starting behaviour of the motor can be detected, and the control device being designed in such a way that the control device detects a starting obstacle of the motor and adjusts the starting behaviour of the motor according to a predetermined correction scheme, wherein the control device is designed such that the control device sets a torque (12) of the motor and a direction of rotation (14) of the motor section wise, and **characterised in that** in each section (15) the direction of rotation (14) of the motor is reversed and the torque is successively increased.

11. Control device according to claim 10, wherein at least one sensor is provided and the sensor detects a starting behaviour of the motor and the sensor detects a starting obstacle of the motor.

12. Control device according to claim 10 or 11, wherein the control device is designed in such a way that the control device increases the torque (12) of the motor up to a predetermined set-point torque.

13. Heat exchanger (10) comprising a fan (11), **characterized in that** the fan (11) is operated according to a method according to one of claims 1-9, and comprises a control device according to one of claims 10 to 12.

## Revendications

1. Un procédé pour commander un moteur d'un ventilateur (11) d'un échangeur de chaleur (10), comprenant :
Détecter un comportement de démarrage du moteur ;
Détecter un obstacle au démarrage du moteur ;
Ajuster le comportement de démarrage du moteur selon un schéma de correction prédéterminé comprenant : ajuster un couple (12) section par section et un sens de rotation (14) du moteur
**caractérisé en ce que**
le sens de rotation (14) est inversé dans chaque section (15) et le couple est successivement augmenté.

2. Un procédé pour commander un ventilateur (11) selon la revendication 1, dans lequel le couple (12) du moteur est changé jusqu'à un couple nominal prédéterminé.

3. Un procédé pour commander un ventilateur (11) selon l'une des revendications précédentes, dans lequel les intervalles de temps de chaque section (15) correspondent à la fréquence propre du ventilateur (11).

4. Un procédé pour commander un ventilateur (11) selon l'une des revendications précédentes, dans lequel le couple (12) est augmenté après que le sens de rotation (14) a été inversé.

5. Un procédé pour commander un ventilateur (11) selon l'une des revendications précédentes, dans lequel après avoir atteint le couple nominal (13), le couple (12) n'est plus augmenté.

6. Un procédé pour commander un ventilateur (11) selon l'une des revendications précédentes, dans lequel le temps d'arrêt du moteur du ventilateur (11) est détecté.

7. Un procédé pour commander un ventilateur (11) selon l'une des revendications précédentes, dans lequel le moteur du ventilateur (11) démarre après avoir atteint un temps d'arrêt nominal si aucune demande de charge de l'échangeur de chaleur (10) n'est détectée.

8. Un procédé pour commander un ventilateur (11) selon l'une des revendications précédentes, dans lequel le moteur du ventilateur (11) est mis en fonctionnement normal lorsqu'une demande de charge existe.

9. Un procédé pour commander un ventilateur (11) selon l'une des revendications précédentes, dans lequel une température ambiante de l'échangeur de chaleur (10) est détectée.

10. Un dispositif de commande pour un ventilateur (11) d'un échangeur de chaleur (10) pour réaliser un procédé selon l'une des revendications 1 à 9, dans lequel le dispositif de commande est conçu de telle sorte qu'en état de fonctionnement, un comportement de démarrage du moteur peut être détecté, et le dispositif de commande est conçu de telle sorte que le dispositif de commande détecte un obstacle au démarrage du moteur et ajuste le comportement de démarrage du moteur selon un schéma de correction prédéterminé, dans lequel le dispositif de commande est conçu de telle sorte que le dispositif de commande ajuste un couple (12) du moteur section par section et un sens de rotation (14) du moteur, et **caractérisé en ce que** le sens de rotation (14) du moteur est inversé dans chaque section (15) et le couple est successivement augmenté.

11. Un dispositif de commande selon la revendication 10, dans lequel au moins un capteur est prévu et le capteur détecte un comportement de démarrage du moteur et le capteur détecte un obstacle au démarrage du moteur.

12. Un dispositif de commande selon la revendication 10 ou 11, dans lequel le dispositif de commande est conçu de telle sorte que le dispositif de commande augmente le couple (12) du moteur jusqu'à un couple nominal prédéterminé.

13. Un échangeur de chaleur (10) comprenant un ventilateur (11), **caractérisé en ce que** le ventilateur (11) est fonctionné selon un procédé selon l'une des revendications 1 à 9, et comprend un dispositif de commande selon l'une des revendications 10 à 12.
